# FASCICULE DE BREVET EUROPEEN

(11) **EP 1 910 167 B1**
(45) Date de publication et mention de la délivrance du brevet: **24.12.2008**
(21) Numéro de dépôt: 06778050.2
(22) Date de dépôt: 28.07.2006
(51) Int. Cl.: B64D 27/18

(54) **ENSEMBLE POUR AERONEF COMPRENANT UN ELEMENT DE VOILURE AINSI QU'UN MAT D'ACCROCHAGE**
ANORDNUNG FÜR EIN FLUGZEUG MIT EINEM FLÜGELSYSTEMELEMENT UND EINEM BEFESTIGUNGSMAST
ASSEMBLY FOR AIRCRAFT COMPRISING A WING SYSTEM ELEMENT AS WELL AS AN ATTACHMENT MAST

(30) Priorité: 29.07.2005 FR 0552386
(43) Date de publication de la demande: 16.04.2008
(73) Titulaire: AIRBUS France, 31060 Toulouse Cédex (FR)
(72) Inventeur: LAFONT, Laurent, F-31320 Pechbusque (FR)
(74) Mandataire: Ilgart, Jean-Christophe
(86) Numéro de dépôt international: PCT/EP2006/064782
(87) Numéro de publication internationale: WO 2007/012667

(56) Documents cités:
- US-A- 3 831 888
- US-A- 4 560 122
- US-A- 6 095 456

## Description

### DOMAINE TECHNIQUE

La présente invention se rapporte de façon générale à un ensemble pour aéronef comprenant un élément de voilure ainsi qu'un mât d'accrochage d'un moteur sous ledit élément de voilure.

Un tel ensemble peut être utilisé sur tout type d'aéronef comportant par exemple des turbomoteurs suspendus à sa voilure, tels que des turboréacteurs ou des turbopropulseurs.

### ETAT DE LA TECHNIQUE ANTERIEURE

Sur les aéronefs existants, les turbomoteurs sont suspendus en dessous de la voilure par des dispositifs d'accrochage complexes, également appelés « EMS » (de l'anglais « Engine Mounting Structure »), ou encore mât d'accrochage. Dans le cas des turboréacteurs, les dispositifs d'accrochage habituellement employés présentent une structure rigide formant caisson, c'est-à-dire constituée par l'assemblage de longerons inférieur et supérieur raccordés entre eux par une pluralité de nervures transversales.

De façon connue, ces mâts sont notamment conçus pour permettre la transmission à la voilure des efforts statiques et dynamiques engendrés par les turbomoteurs, tels que le poids, la poussée, ou encore les différents efforts dynamiques.

A ce titre, dans les mâts d'accrochage connus de l'art antérieur, comme dans le document US 4560122, la transmission des efforts entre celui-ci et la voilure est classiquement assurée par une attache avant constituée de deux demi-attaches latérales, une attache arrière, ainsi qu'une attache intermédiaire notamment destinée à reprendre les efforts de poussée générés par le turbomoteur associé.

Pour ce faire, l'attache intermédiaire destinée à reprendre les efforts de poussée, également appelée attache « spigot », est de façon générale matérialisé par une rotule fixée dans le longeron supérieur arrière de la structure rigide, entre l'attache avant et l'attache arrière. Cette attache spigot aux dimensions très importantes comprend aussi un axe ou pion de cisaillement fixé sous la voilure de l'aéronef par l'intermédiaire d'une ferrure d'encastrement, de façon à pouvoir se loger dans la rotule susmentionnée.

D'autre part, les deux demi-attaches avant sont chacune conçues de manière à reprendre des efforts s'exerçant selon la direction verticale du mât. Pour ce faire, elles sont chacune pourvues d'une manille agencée dans un plan vertical et longitudinal, d'une part montée de façon articulée, par l'intermédiaire d'un premier axe, sur une première ferrure solidaire d'un longeron avant appartenant à l'élément de voilure, et d'autre part montée de façon articulée, par l'intermédiaire d'un second axe, sur une seconde ferrure solidaire de la structure rigide. De plus, les deux demi-attaches avant sont généralement disposées symétriquement par rapport à un plan médian vertical et longitudinal du mât d'accrochage, ce plan, parallèle à ceux dans lesquels se trouvent respectivement les deux manilles, constituant également un plan de symétrie pour la structure rigide de ce mât.

Cette solution extrêmement répandue présente néanmoins des inconvénients non négligeables, qui vont être exposés ci-dessous.

Tout d'abord, il est noté que la volonté d'aboutir à la symétrie précitée entre les deux demi-attaches avant oblige parfois à placer celles-ci très en avant du longeron avant de l'élément de voilure. Cette contrainte accentuée pour la demi-attache la plus éloignée du fuselage de l'aéronef provoque des problèmes d'introduction d'efforts dans le caisson de voilure, des problèmes d'aménagement du bord d'attaque, voire également de problèmes aérodynamiques. A ce titre, il est précisé que le risque de devoir agencer les demi-attaches très en avant par rapport au longeron avant de l'élément de voilure est naturellement d'autant plus important que la largeur de la structure rigide est grande, l'élargissement de cette structure rigide étant pourtant une solution souvent employée dans le but de permettre à cette structure de supporter des efforts toujours plus importants, liés à l'augmentation de la puissance des moteurs équipant les aéronefs.

Par ailleurs, cette symétrie entre les deux demi-attaches engendre aussi inévitablement la présence d'une première ferrure de grande dimension longitudinale entre la manille de la demi-attache la plus éloignée du fuselage et le longeron avant de l'aile, cette contrainte étant bien entendu extrêmement pénalisante en terme de masse globale de l'ensemble. Ici encore, dans l'optique du respect de la symétrie entre les deux demi-attaches avant, il est noté que la longueur de cette première ferrure doit être d'autant plus importante que la largeur de la structure rigide est grande.

### EXPOSÉ DE L'INVENTION

L'invention a donc pour but de proposer un ensemble pour aéronef remédiant au moins partiellement aux problèmes rencontrés dans les ensembles de l'art antérieur.

Pour ce faire, l'invention a pour objet un ensemble pour aéronef comprenant un élément de voilure ainsi qu'un mât d'accrochage d'un moteur sous l'élément de voilure, l'ensemble comprenant également des moyens d'accrochage d'une structure rigide du mât sur l'élément de voilure, ces moyens d'accrochage comportant deux demi-attaches avant chacune pourvue d'une manille et conçue de manière à assurer la reprise des efforts s'exerçant selon une direction verticale du mât d'accrochage, cette manille étant d'une part montée de façon articulée, par l'intermédiaire d'un premier axe, sur une première ferrure solidaire d'un longeron avant appartenant à l'élément de voilure et s'étendant selon une direction d'envergure de cet élément de voilure, et d'autre part montée de façon articulée, par l'intermédiaire d'un second axe, sur une seconde ferrure solidaire de la structure rigide. Selon l'invention, les deux manilles des demi-attaches avant sont agencées dans un même plan parallèle à la direction d'envergure.

Dans cet ensemble selon l'invention, il n'est donc plus prévu de symétrie selon le plan médian vertical et longitudinal du mât entre les deux demi-attaches avant, comme cela était le cas dans les réalisations de l'art antérieur. Le fait que les deux manilles soient situées dans un même plan parallèle à la direction d'envergure, donc parallèlement au longeron avant de l'aile, implique avantageusement que les deux demi-attaches peuvent toutes les deux rester à l'intérieur de l'aile et de son bord d'attaque, sans faire saillie de celui-ci vers l'avant. Les performances aérodynamiques peuvent ainsi être considérablement augmentées.

D'autre part, cette solution permet de rapprocher au plus près les manilles du longeron avant, et donc de raccourcir très sensiblement la longueur des deux ferrures interposées entre ce longeron avant et leur manille associée, et ce quelle que soit la largeur de structure rigide du mât d'accrochage. Cela permet bien entendu de diminuer la masse globale de l'ensemble, et d'améliorer sensiblement la reprise des efforts.

De préférence, le plan dans lequel sont agencées les deux manilles des demi-attaches avant est également parallèle à la direction verticale du mât d'accrochage, tout comme l'âme du longeron avant. Par conséquent, les possibilités de rapprocher les deux manilles de ce longeron, et donc de rendre compactes les demi-attaches avant, sont davantage accentuées. Il en résulte donc ici encore une nette diminution de la masse globale de l'ensemble, ainsi qu'une amélioration sensible de la reprise des efforts.

Préférentiellement, la seconde ferrure de chaque demi-attache avant est une ferrure à double têtes entre lesquelles est agencée la manille, et pour chaque demi-attache avant, le premier axe traverse également une ferrure secondaire rapportée fixement sur l'élément de voilure, de telle sorte que cette manille soit située entre la première ferrure et la ferrure secondaire.

Toujours de manière préférentielle, l'une des deux demi-attaches avant est conçue de manière à ce que sa manille soit également montée de façon articulée, par l'intermédiaire d'un troisième axe, sur la première ferrure solidaire du longeron avant, afin que cette demi-attache avant soit capable d'assurer la reprise des efforts s'exerçant selon la direction d'envergure.

Dans ce cas où l'autre des deux demi-attaches avant est alors uniquement conçue pour reprendre les efforts s'exerçant selon la direction verticale, on peut prévoir que les moyens d'accrochage comportent en outre une attache arrière conçue de manière à assurer la reprise des efforts s'exerçant selon une direction longitudinale du mât, selon une direction transversale de ce même mât, ainsi que selon la direction verticale. Alternativement, cette attache arrière peut être conçue de manière à assurer la reprise des efforts s'exerçant selon la direction longitudinale du mât, selon la direction d'envergure, ainsi que selon la direction verticale.

Par conséquent, dans ces deux cas, les moyens d'accrochage sont alors en mesure de former un système de montage isostatique exclusivement constitué par les deux demi-attaches avant et l'attache arrière.

Avec un tel agencement, l'attache intermédiaire du type spigot est donc avantageusement supprimée. Or il est noté que sur les turbomoteurs des aéronefs récents, l'important taux de dilution recherché conduit à obtenir un encombrement extrêmement élevé, puisqu'une augmentation du taux de dilution engendre inéluctablement une hausse du diamètre du moteur, et plus particulièrement une hausse du diamètre de son carter de soufflante. Ainsi, avec une garde au sol qui est naturellement fixée de manière à rester acceptable du point de vue sécuritaire, l'espace restant entre l'aile et le turbomoteur servant à loger le mât d'accrochage ainsi que les différentes attaches est de plus en plus restreint, alors que paradoxalement, les efforts à reprendre sont bien entendu de plus en plus élevés. Cette évolution des turbomoteurs a eu pour conséquence néfaste d'imposer une réduction des dimensions verticales du mât d'accrochage, notamment de manière à pouvoir conserver un espace suffisant pour placer la ferrure d'encastrement de l'attache intermédiaire, dont les grandes dimensions étaient imposées par la nécessité de reprendre les efforts orientés selon les directions longitudinale et transversale du turbomoteur.

On peut donc comprendre que la suppression de cette attache intermédiaire du type spigot permet d'obtenir un espace plus important pour loger le mât d'accrochage, et autorise par voie de conséquence l'augmentation des dimensions du mât d'accrochage qui peut ainsi être mieux adapté aux efforts importants qu'il est destiné à reprendre, et/ou permet l'augmentation de la garde au sol en rapprochant au plus près la structure rigide de l'intrados de l'aile.

Enfin, l'invention a également pour objet un aéronef comprenant au moins un ensemble tel que celui qui vient d'être décrit.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de côté d'un ensemble pour aéronef selon un mode de réalisation préféré de la présente invention ;
- la figure 2 représente une vue partielle de dessus de l'ensemble montré sur la figure 1 ;
- la figure 3 représente une vue en coupe prise le long de la ligne III-III de la figure 2 ;
- la figure 4 représente une vue en coupe prise le long de la ligne IV-IV de la figure 3 ;
- la figure 5 représente une vue en coupe prise le long de la ligne V-V de la figure 3 ;
- la figure 6 est une vue similaire à celle montrée sur la figure 4, avec l'ensemble se présentant sous la forme d'un autre mode de réalisation préféré de la présente invention ;
- la figure 7 représente une vue en coupe prise le long de la ligne VII-VII de la figure 6 ;
- la figure 8 représente une vue en coupe prise le long de la ligne VIII-VIII de la figure 6 ;
- la figure 9 représente une vue schématique symbolisant la reprise des efforts assurée par chacune des attaches de l'ensemble se présentant sous la forme du mode de réalisation préféré montré sur les figures 6 à 8 ; et
- la figure 10 représente une vue schématique symbolisant la reprise des efforts assurée par chacune des attaches de l'ensemble se présentant sous la forme d'une alternative du mode de réalisation préféré montré sur les figures 6 à 8.

### EXPOSÉ DÉTAILLÉ DE MODES DE RÉALISATION PRÉFÉRÉS

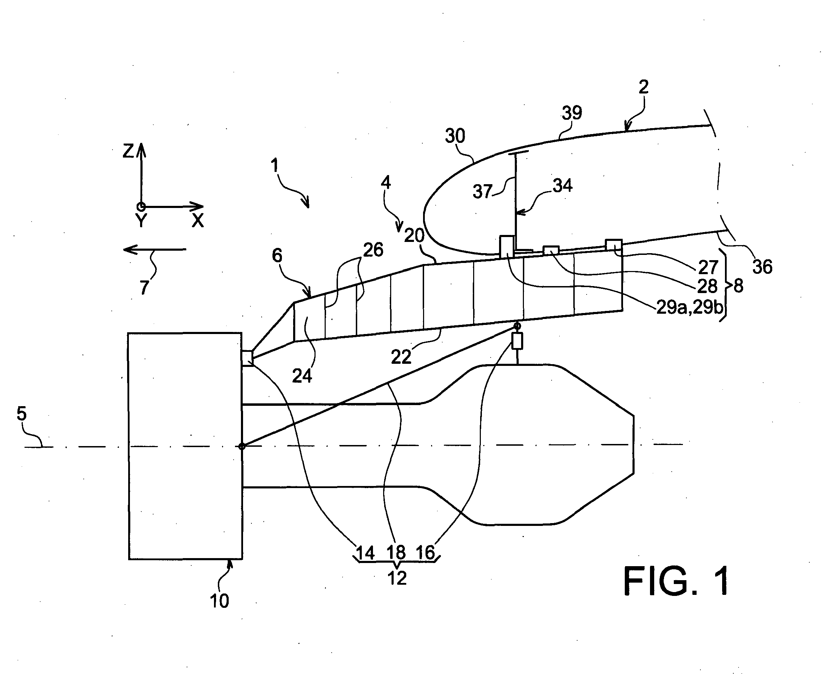

En référence à la figure 1, on voit un ensemble 1 pour aéronef selon un premier mode de réalisation préféré de la présente invention.

Globalement, cet ensemble 1 comprend un élément de voilure 2 tel qu'une aile, un mât d'accrochage 4 d'un moteur 10 tel qu'un turboréacteur, ainsi que des moyens d'accrochage 8 d'une structure rigide 6 formant caisson du mât 4, sur l'élément de voilure 2.

Par ailleurs, sur cette figure 1, il est également représenté à titre indicatif des moyens d'accrochage 12 interposés entre la structure rigide 6 et le turbomoteur 10, ces moyens 12 étant constitués d'une ou plusieurs attaches moteur avant 14, une attache moteur arrière 16, et d'un dispositif de reprise des efforts de poussée 18 essentiellement muni de bielles latérales de reprise.

Ces moyens d'accrochage 12 ne font pas partie de la présente invention, et ne seront par conséquent pas davantage décrits.

Dans toute la description qui va suivre, par convention, on appelle X la direction longitudinale du mât 4 qui est également assimilable à la direction longitudinale du turboréacteur 10, cette direction X étant parallèle à un axe longitudinal 5 de ce turboréacteur 2. D'autre part, on appelle Y la direction orientée transversalement par rapport au mât 4 et également assimilable à la direction transversale du turboréacteur 2, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par les turbomoteurs 10, cette direction étant représentée schématiquement par la flèche 7.

Toujours en référence à la figure 1, on peut voir que seule la structure rigide formant caisson 6 du mât d'accrochage 4 a été représentée, accompagnée des moyens d'accrochage 8 de cette structure rigide sous l'élément de voilure 2. Les autres éléments constitutifs non-représentés de ce mât 4, du type structure secondaire assurant la ségrégation et le maintien des systèmes tout en supportant des carénages aérodynamiques, sont des éléments classiques identiques ou similaires à ceux rencontrés dans l'art antérieur, et connus de.l'homme du métier. Par conséquent, il n'en sera fait aucune description détaillée.

De la même manière, il est indiqué que la structure rigide 6 est similaire à celles rencontrées dans les dispositifs de l'art antérieur. Ainsi, elle est effectivement du type « caisson », c'est-à-dire formée par l'assemblage de longerons supérieur 20 et inférieur 22 et de deux panneaux latéraux 24 (un seul étant visible en raison de la vue de côté), ces éléments 20, 22, 24 étant raccordés entre eux par l'intermédiaire de nervures transversales 26 qui sont habituellement orientées selon des plans parallèles YZ.

Dans ce mode de réalisation, les moyens d'accrochage 8 comprennent une attache arrière 27 interposée entre une partie arrière de la structure rigide 6 et l'intrados 36 de l'aile 2, et est conçue pour assurer la reprise des efforts s'exerçant selon les directions Y et Z, mais pas ceux s'exerçant selon la direction X. D'autre part, les moyens d'accrochage 8 comprennent aussi une attache intermédiaire 28, par exemple du type spigot, interposée entre le longeron supérieur 20 de la structuré rigide 6 et l'intrados 36 de l'aile 2, cette attache 28 étant conçue pour assurer la reprise des efforts s'exerçant selon les directions X et Y, mais pas ceux s'exerçant selon la direction Z. Ces deux attaches 27, 28 sont réalisées d'une manière connue et classique de l'homme du métier, et elles ne seront donc pas davantage décrites.

En revanche, les moyens d'accrochage 8, formant un système de montage isostatique, comportent également deux demi-attaches avant 29a, 29b spécifiques à la présente invention et dont une description détaillée sera effectuée ci-après, chacune de ces demi-attaches 29a, 29b étant conçue de manière à assurer la reprise des efforts s'exerçant selon la direction Z, mais pas ceux s'exerçant selon les directions X et Y.

Avec ce système isostatique, la reprise des efforts s'exerçant selon la direction X s'effectue à l'aide de l'attache intermédiaire 28, la reprise des efforts s'exerçant selon la direction Y s'effectue conjointement à l'aide des attaches intermédiaire 28 et arrière 27, et la reprise des efforts s'exerçant selon la direction Z s'effectue conjointement à l'aide des deux demi-attaches 29a, 29b et de l'attache arrière 27. D'autre part, la reprise du moment s'exerçant selon la direction X s'effectue verticalement à l'aide des deux demi-attaches avant 29a, 29b, la reprise du moment s'exerçant selon la direction Y s'effectue verticalement à l'aide des deux demi-attaches 29a, 29b et de l'attache arrière 27, et la reprise du moment s'exerçant selon la direction Z s'effectue transversalement à l'aide de l'attache intermédiaire 28 et de l'attache arrière 27.

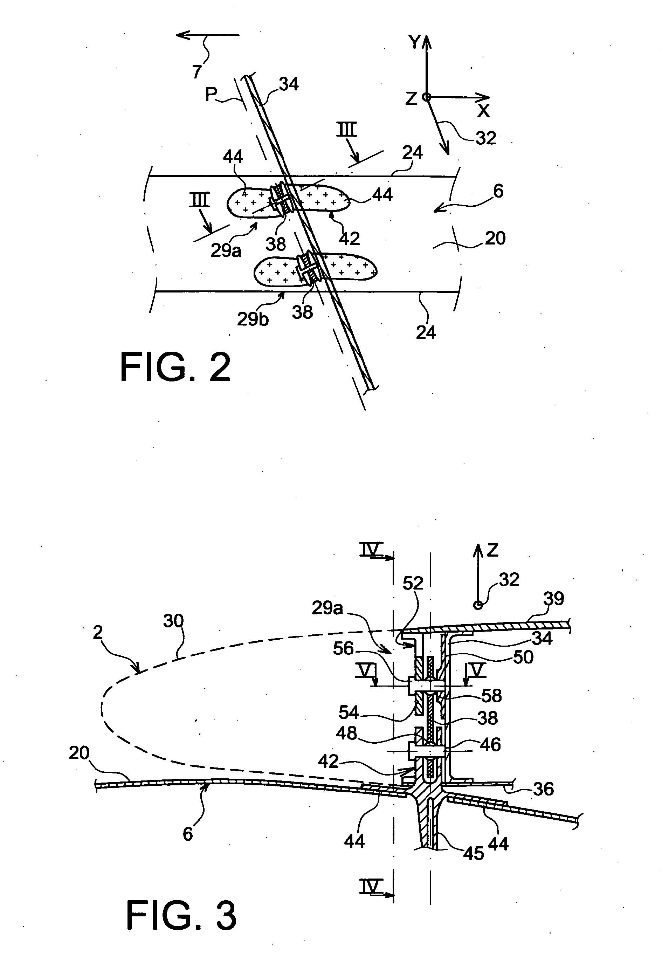

En référence à la figure 2, on peut voir que chacune des deux demi-attaches avant 29a, 29b est équipée d'une manille 38 également appelée biellette, par exemple une manille double, en forme de plaque, qui est globalement raccordée à la structure rigide 6 et à un longeron avant 34 de l'élément de voilure 2 (non représenté sur cette figure). Classiquement, ce longeron 34 est orienté parallèlement au bord d'attaque 30 de l'ailé 2, à savoir parallèlement à une direction d'envergure 32 de celle-ci, cette direction 32 étant située dans un plan XY et inclinée par rapport à ces deux directions X et Y.

L'une des particularités de l'invention consiste à prévoir que les deux manilles 38 appartenant respectivement aux deux demi-attaches avant 29a, 29b sont agencées dans un même plan P (représenté par une ligne en raison de la vue de dessus), ce plan P étant parallèle à la direction d'envergure 32, et de préférence parallèle à la direction Z. Dans un tel cas, le plan P dans lequel sont agencées les manilles 38 se trouve donc placé parallèlement à un plan dans lequel se situe l'âme 37 du longeron avant 34, ce qui permet avantageusement de rapprocher au plus près les manilles 38 de l'âme 37. D'une façon générale, comme on peut le voir sur la figure 2, les manilles 38 sont donc agencées parallèlement au longeron 34, à proximité de ce dernier.

La demi-attache avant 29a située la plus proche du fuselage de l'aéronef, ici celle de droite, va à présent être détaillée en référence aux figures 3 à 5. L'autre demi-attache avant 29b dispose d'une conception identique, et ne sera par conséquent pas davantage décrite. D'ailleurs, ces deux demi-attaches 29a, 29b sont disposées symétriquement par rapport à un plan orthogonal au plan P.

En référence donc aux figures 3 à 5, on peut apercevoir que dans ce mode de réalisation préféré où la demi-attache 29a est exclusivement destinée à reprendre les efforts selon la direction Z, la manille 38 prend la forme d'une plaque s'étendant selon la direction Z, et disposant d'une faible largeur selon la direction 32.

Elle présente une extrémité inférieure située entre les deux têtes d'une seconde ferrure 42 montée fixement sur le longeron supérieur 20 de la structure rigide 6, à l'aide de pattes longitudinales 44 rapportées sur ce même longeron. Par ailleurs, cette ferrure 42 est également de préférence montée sur l'une des nervures transversales de cette structure en forme de caisson, ce qui explique la raison pour laquelle la partie inférieure 45 de cette ferrure 42 fait saillie à l'intérieur du caisson. Les deux têtes de la ferrure 42 formant chape et traversant l'intrados 36 sont de préférence orientées selon des plans parallèles au plan P.

Un second axe 46 pénètre successivement dans trois orifices respectivement prévus dans la tête avant de la ferrure 42, l'extrémité inférieure de la manille 38, et la tête arrière de la ferrure 42. L'axe 46, préférentiellement orienté orthogonalement par rapport au plan P, permet ainsi d'articuler la manille 38 sur la seconde ferrure 42, en l'associant de préférence à une rotule 48 logée dans l'orifice de la manille 38, et traversée par ce même axe 46.

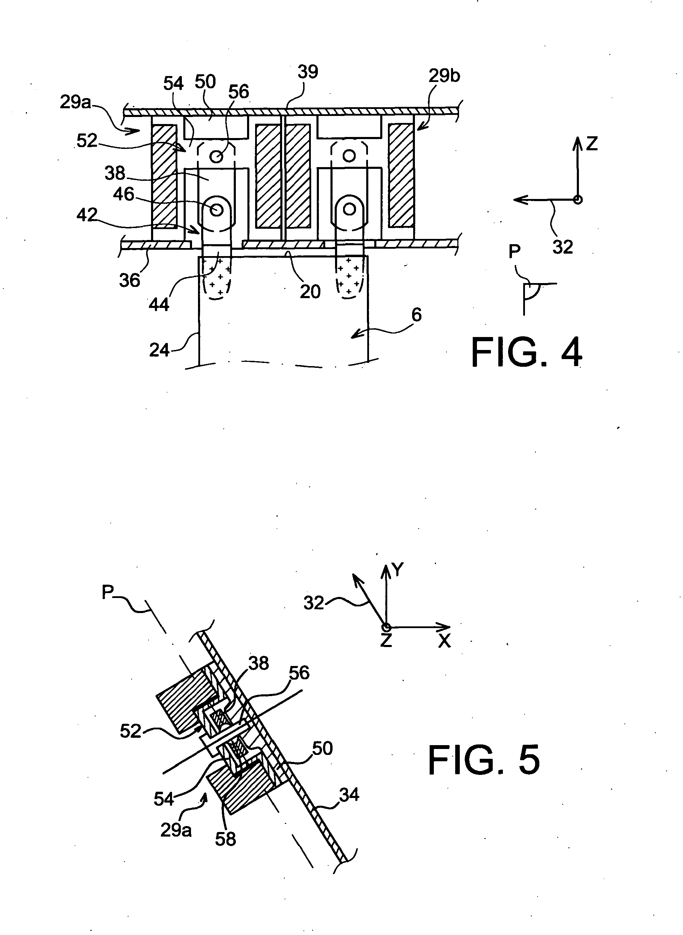

En se prolongeant dans la direction Z, vers le haut, la manille 38 présente une extrémité supérieure située entre une première ferrure 50 montée fixement sur le longeron avant 34 de l'aile 2, et une ferrure secondaire 52 rapportée fixement sur cette aile. Si ces deux ferrures espacées l'une de l'autre dans la direction orthogonale au plan P sont chacune orientées sensiblement parallèlement à ce même plan P, il est noté que la première ferrure 50 épousant le longeron 34 est de préférence sensiblement pleine, tandis que la ferrure secondaire 52 présente globalement une forme de H avec la barre 54 de ce H agencée selon la direction d'envergure 32. Avec cet agencement particulier, l'espace inférieur libre situé sous la barre du H peut donc être partiellement pénétré par la tête avant de la seconde ferrure 42, comme cela est le mieux visible sur les figures 3 et 4. Il en résulte bien entendu un gain d'encombrement et de masse non négligeable.

Cette ferrure secondaire 52 est alors rapportée fixement sur l'élément de voilure 2 en étant montée d'une part sur l'extrados 39 de l'aile 2 (figure 3), et d'autre part sur la première ferrure 50 (figure 5). Un premier axe 56 pénètre successivement dans trois orifices respectivement prévus dans la barre 54 du H de la ferrure 52, l'extrémité supérieure de la manille 38, et la ferrure 50. L'axe 56, préférentiellement orienté orthogonalement par rapport au plan P, permet ainsi d'articuler la manille 38 sur la première ferrure 50, en l'associant de préférence à une rotule 58 logée dans l'orifice de la manille 38, et traversée par ce même axe 56.

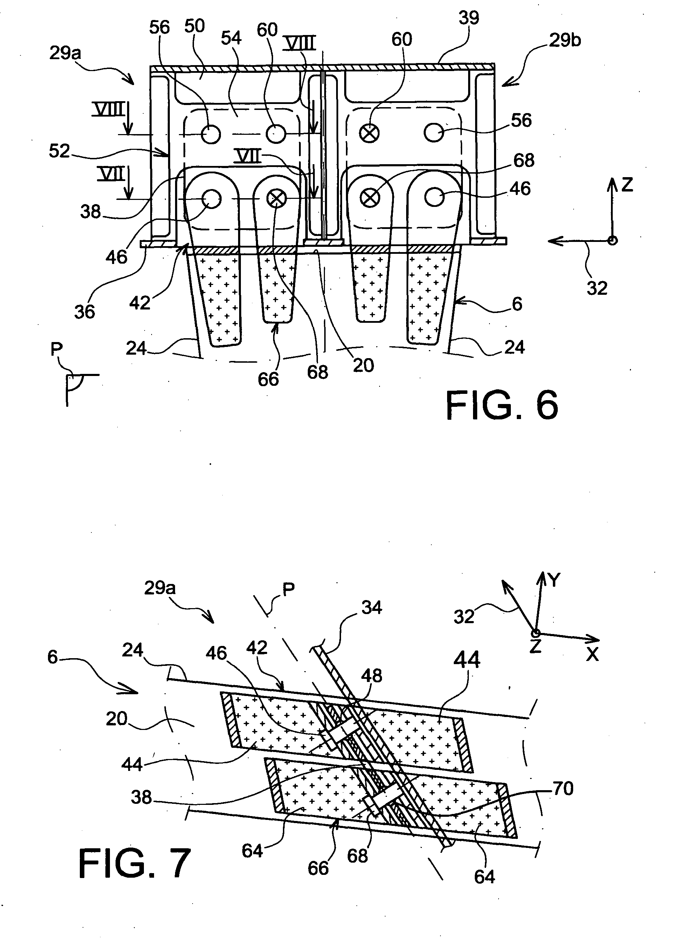

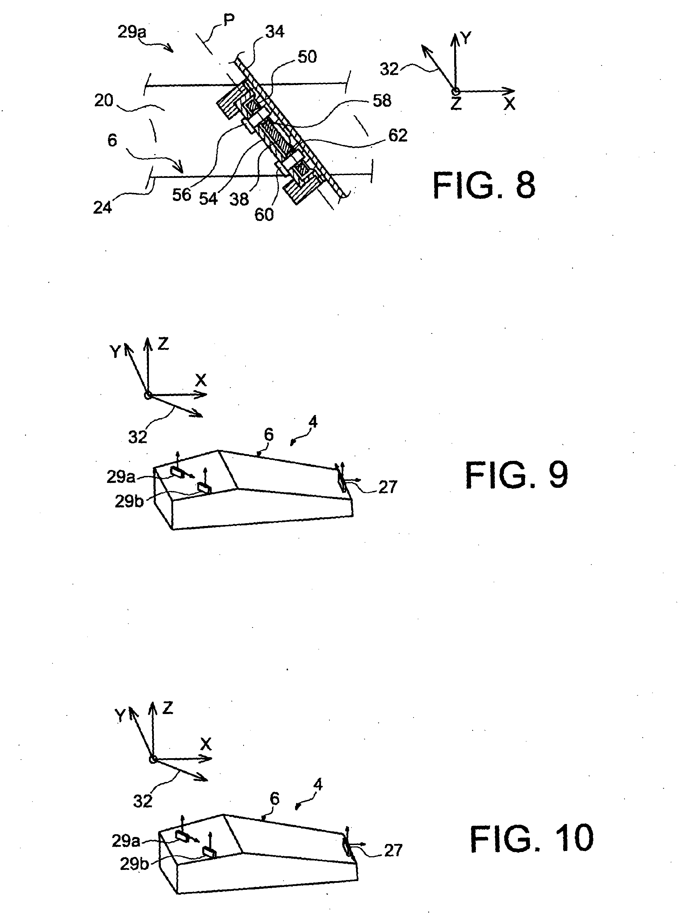

En référence à présent aux figures 6 à 9, on peut voir une partie d'un ensemble selon un autre mode de réalisation préféré de la présente invention. Dans ce mode, il est prévu que l'une des deux demi-attaches avant, ici la demi-attache 29a, est conçue de manière à être capable d'assurer la reprise dés efforts s'exerçant selon la direction Z et selon la direction d'envergure 32, l'autre des deux demi-attaches étant toujours conçue pour reprendre uniquement les efforts s'exerçant selon la direction Z. Parallèlement, on prévoit de supprimer l'attache intermédiaire 28, et de modifier l'attache arrière 27 de manière à ce que celle-ci soit capable d'assurer la reprise des efforts s'exerçant selon les directions X, Y et Z, comme le montre schématiquement la figure 9.

Avec ce nouveau système de montage isostatique, la reprise des efforts s'exerçant selon la direction X s'effectue à l'aide de l'attache arrière 27, la reprise des efforts s'exerçant selon la direction Y s'effectue à l'aide de l'attache arrière 27 tandis que la reprise des efforts s'exerçant selon la direction d'envergure 32 s'effectue à l'aide de la demi-attache 29a, et la reprise des efforts s'exerçant selon la direction Z s'effectue conjointement à l'aide des deux demi-attaches 29a, 29b et de l'attache arrière 27. D'autre part, la reprise du moment s'exerçant selon la direction X s'effectue verticalement à l'aide des deux demi-attaches avant 29a, 29b, la reprise du moment s'exerçant selon la direction Y s'effectue verticalement à l'aide des deux demi-attaches 29a, 29b et de l'attache arrière 27, et la reprise du moment s'exerçant selon la direction Z s'effectue conjointement à l'aide de la demi-attache avant 29a et de l'attache arrière 27.

Pour faire en sorte que la demi-attache avant 29a puisse reprendre les efforts s'exerçant selon la direction 32, il est prévu un troisième axe 60 pénétrant successivement dans trois orifices respectivement prévus dans la barre 54 du H de la ferrure 52, l'extrémité supérieure de la manille 38, et la ferrure 50. L'axe 60, préférentiellement orienté orthogonalement par rapport au plan P, permet ainsi de prévoir une nouvelle articulation entre la manille 38 sur la première ferrure 50, en l'associant de préférence à une rotule 62 logée dans l'orifice de la manille 38, et traversée par ce même axe 60.

Ce troisième axe 60, situé de façon décalée par rapport au premier axe 56, de préférence uniquement dans la direction 32, permet ainsi avec les premier et second axes 56, 46 d'assurer une reprise d'efforts triangulaire tout à fait adaptée pour reprendre uniquement les efforts s'exerçant selon les directions Z et 32.

La manille 38 de ce mode de réalisation doit donc être étendue dans la direction 32 pour pouvoir être traversée par le troisième axe 60, ce qui implique qu'elle prend ici préférentiellement la forme d'un carré, ou d'un rectangle moins allongé que celui rencontré dans le mode de réalisation représenté sur les figures 2 à 5. Les autres éléments de la demi-attache 29a présentée précédemment se retrouvent dans ce mode de réalisation, et, à ce titre, il est précisé que sur les figures, les éléments portant les mêmes références numériques correspondent à des élément identiques ou similaires.

Pour assurer une fonction de sécurité au niveau de la demi-attache avant 29a, dite fonction « Fail Safe », cette demi-attache comporte une ferrure de sécurité 66 sensiblement identique à la seconde ferrure 42, et située à proximité de celle-ci. En effet, l'extrémité inférieure de la manille 38 est située entre les deux têtes de cette ferrure 66 montée fixement sur le longeron supérieur 20 de la structure rigide 6, à l'aide de pattes longitudinales 64 rapportées sur ce même longeron. Par ailleurs, cette ferrure 66 est également de préférence montée sur l'une des nervures transversales de cette structure en forme de caisson, et les deux têtes de celle-ci traversant l'intrados 36 sont orientées selon des plans parallèles au plan P, puisqu'elles se situent respectivement dans le prolongement, selon la direction 32, des deux têtes de la seconde ferrure 42.

Un quatrième axe 68 pénètre successivement dans trois orifices respectivement prévus dans la tête avant de la ferrure 66, l'extrémité inférieure de la manille 38, et la tête arrière de la ferrure 66. L'axe 68, préférentiellement orienté orthogonalement par rapport au plan P, permet ainsi d'articuler la manille 38 sur la ferrure 66, en l'associant de préférence à une rotule 70 logée dans l'orifice de la manille 38, et traversée par ce même axe 68. Néanmoins, il est noté que le montage de cet axe 68, également dit axe « Fail Safe », s'effectue avec un jeu radial de manière à ce qu'aucun effort ne transite par ce dernier en conditions normales, et de sorte que cet axe puisse constituer un nouveau chemin d'effort en cas de rupture de l'un des trois autres axes 46, 56, 60.

De préférence, comme cela est visible sur la figure 6, les quatre axes 46, 56, 60 et 68 forment un quadrilatère, préférentiellement un carré ou un rectangle. Par conséquent, en cas de rupture de l'un quelconque des premier, second et troisième axes 56, 46, 60 dits axes actifs, on peut s'apercevoir que les deux axes actifs restant forment avec l'axe « Fail Safe » 68 un nouvel ensemble également capable d'assurer une reprise d'effort triangulaire dans la plan P, tout à fait adaptée à la reprise des efforts s'exerçant selon les directions Z et 32.

A nouveau en référence à la figure 6, on peut voir que l'autre demi-attache avant, c'est-à-dire la demi-attache 29b située la plus éloignée du fuselage, dispose d'une conception sensiblement identique à celle qui vient d'être décrite en référence aux figures 6 à 9. La seule différence réside dans le fait que le troisième axe 60 est monté de la même façon que le quatrième axe 68, à savoir avec un jeu radial l'empêchant de faire passer des efforts en conditions normales, mais capable de constituer un nouveau chemin d'effort en cas de rupture de l'axe 56. En effet, dans cette demi-attache 29b uniquement destinée à reprendre les efforts selon la direction Z, ces efforts passent normalement par les premier et second axes 56, 46 qui sont les seuls axes actifs. En cas de rupture du premier, c'est alors le troisième axe 60 qui devient actif pour assurer la jonction entre la manille 38 et le longeron avant 34 de l'aile 2, et en cas de rupture du second, c'est le quatrième axe 68 qui devient actif pour assurer la jonction entre la manille 38 et le longeron supérieur 20 de la structure rigide 6.

Selon une alternative du mode de réalisation préféré montré sur les figures 6 à 9, la seule modification réside dans le fait de prévoir que l'attache arrière 27 est conçue de manière à assurer la reprise des efforts s'exerçant selon les directions X, 32 et Z, et non plus X, Y et Z, comme cela est montré schématiquement sur la figure 10. Dans ce nouveau système isostatique intégrant l'attache arrière 27, la reprise des efforts s'exerçant selon la direction X s'effectue à l'aide de l'attache arrière 27, la reprise des efforts s'exerçant selon la direction d'envergure 32 s'effectue conjointement à l'aide de la demi-attache 29a et de l'attache arrière 27, et la reprise des efforts s'exerçant selon la direction Z s'effectue conjointement à l'aide des deux demi-attaches 29a, 29b et de l'attache arrière 27. D'autre part, la reprise du moment s'exerçant selon la direction X s'effectue verticalement à l'aide des deux demi-attaches avant 29a, 29b, la reprise du moment s'exerçant selon la direction d'envergure 32 s'effectue verticalement à l'aide des deux demi-attaches 29a, 29b et de l'attache arrière 27, et la reprise du moment s'exerçant selon la direction Z s'effectue conjointement à l'aide de la demi-attache avant 29a et de l'attache arrière 27.

Bien entendu, diverses modifications peuvent être apportées par l'homme du métier aux ensembles 1 pour aéronef qui viennent d'être décrits, uniquement à titre d'exemples non limitatifs. En particulier, l'ensemble pourrait intégrer deux demi-attaches avant de conception identique ou similaire à celle de la demi-attache avant 29b montrée sur la figure 6 et décrite ci-dessus.

## Revendications

1. Ensemble (1) pour aéronef comprenant un élément de voilure (2) ainsi qu'un mât d'accrochage (4) d'un moteur (10) sous ledit élément de voilure, l'ensemble comprenant également des moyens d'accrochage (8) d'une structure rigide (6) du mât (4) sur l'élément de voilure (2), lesdits moyens d'accrochage (8) comportant deux demi-attaches avant (29a, 29b) chacune pourvue d'une manille (38) et conçue de manière à assurer la reprise des efforts s'exerçant selon une direction verticale (Z) du mât d'accrochage, ladite manille (38) étant d'une part montée de façon articulée, par l'intermédiaire d'un premier axe (56), sur une première ferrure (50) solidaire d'un longeron avant (34) appartenant à l'élément de voilure (2) et s'étendant selon une direction d'envergure (32) de cet élément de voilure (2), et d'autre part montée de façon articulée, par l'intermédiaire d'un second axe (46), sur une seconde ferrure (42) solidaire de ladite structure rigide (6), **caractérisé en ce que** lesdites deux manilles (38) des demi-attaches avant sont agencées dans un même plan (P) parallèle à ladite direction d'envergure (32).

2. Ensemble (1) pour aéronef selon la revendication 1, **caractérisé en ce que** ledit plan (P), dans lequel sont agencées les deux manilles (38) des demi-attaches avant (29a, 29b), est également parallèle à la direction verticale (Z) du mât d'accrochage.

3. Ensemble (1) pour aéronef selon la revendication 1 ou la revendication 2, **caractérisé en ce que** ladite seconde ferrure (42) de chaque demi-attache avant (29a, 29b) est une ferrure à double têtes entre lesquelles est agencée ladite manille (38).

4. Ensemble (1) pour aéronef selon l'une quelconque des revendications précédentes, **caractérisé en ce que** pour chaque demi-attache avant (29a, 29b), ledit premier axe (56) traverse également une ferrure secondaire (52) rapportée fixement sur l'élément de voilure (2), de telle sorte que ladite manille (38) soit située entre ladite première ferrure (50) et ladite ferrure secondaire (52).

5. Ensemble (1) pour aéronef selon l'une quelconque des revendications précédentes, **caractérisé en ce que** l'une (29a) des deux demi-attaches avant (29a, 29b) est conçue de manière à ce que sa manille (38) soit également montée de façon articulée, par l'intermédiaire d'un troisième axe (60), sur ladite première ferrure (50) solidaire du longeron avant (34), afin que cette demi-attache avant (29a) soit capable d'assurer la reprise des efforts s'exerçant selon la direction d'envergure (32).

6. Ensemble (1) pour aéronef selon la revendication 5, **caractérisé en ce que** lesdits premier, second et troisième axes (56, 46, 60) sont orientés orthogonalement par rapport audit plan (P).

7. Ensemble (1) pour aéronef selon l'une quelconque des revendications précédentes, **caractérisé en ce que** lesdits moyens d'accrochage (8) comportent en outre une attache arrière (27) conçue de manière à assurer la reprise des efforts s'exerçant selon une direction longitudinale (X) dudit mât (4), selon une direction transversale (Y) de ce même mât (4), ainsi que selon la direction verticale (Z).

8. Ensemble (1) pour aéronef selon l'une quelconque des revendications 1 à 6, **caractérisé en ce que** lesdits moyens d'accrochage (8) comportent en outre une attache arrière (27) conçue de manière à assurer la reprise des efforts s'exerçant selon une direction longitudinale (X) dudit mât (4), selon la direction d'envergure (32), ainsi que selon la direction verticale (Z).

9. Ensemble (1) pour aéronef selon la revendication 7 ou la revendication 8, **caractérisé en ce que** lesdits moyens d'accrochage (8) forment un système de montage isostatique exclusivement constitué par lesdites deux demi-attaches avant (29a, 29b) et ladite attache arrière (27).

10. Aéronef **caractérisé en ce qu'**il comporte au moins un ensemble (1) selon l'une quelconque des revendications précédentes.

## Claims

1. Assembly (1) for an aircraft comprising a wing element (2) and a suspension pylon (4) for an engine (10) under said wing element, the assembly also comprising means (8) of attaching a rigid structure (6) of the pylon (4) onto the wing element (2), said attachment means (8) comprising two forward half-attachments (29a, 29b), each being provided with a shackle (38) and designed to resist forces applied along a vertical direction (Z) of the suspension pylon, said shackle (38) being mounted firstly articulated through a first pin (56) onto a first fitting (50) fixed to a forward spar (34) forming part of the wing element (2) and extending along the width direction (32) of this wing element (2), and secondly mounted articulated through a second pin (46) onto a second fitting (42) fixed to said rigid structure (6), **characterised in that** said two shackles (38) of the forward half-attachments are arranged in the same plane (P) parallel to the said direction of the width (32).

2. Assembly (1) for an aircraft according to claim 1, **characterised in that** said plane (P) in which the two shackles (38) of the forward half-attachments (29a, 29b) are arranged, is also parallel to the vertical direction (Z) of the suspension pylon.

3. Assembly (1) for an aircraft according to claim 1 or claim 2, **characterised in that** said second fitting (42) of each forward half-attachment (29a, 29b) is a double-head fitting and said shackle (38) is arranged between the two heads.

4. Assembly (1) for an aircraft according to any one of the previous claims, **characterised in that** for each forward half-attachment (29a, 29b), said first pin (56) also passes through a secondary fitting (52) rigidly added onto the wing element (2), such that said shackle (38) is located between said first fitting (50) and said secondary fitting (52).

5. Assembly (1) for an aircraft according to any one of the previous claims, **characterised in that** one (29a) of the two forward half-attachments (29a, 29b) is designed such that its shackle (38) is mounted to be articulated through a third pin (60), onto said first fitting (50) fixed to the forward spar (34), so that this forward half-attachment (29a) is capable of resisting forces applied along the width direction (32).

6. Assembly (1) for an aircraft according to claim 5, **characterised in that** said first, second and third pins (56, 46 60) are oriented to be orthogonal to said plane (P).

7. Assembly (1) for an aircraft according to any one of the previous claims, **characterised in that** said attachment means (8) also comprise an aft attachment (27) designed to resist forces applied along a longitudinal direction (X) of said pylon (4), along a transverse direction (Y) of said pylon (4) and along the vertical direction (Z).

8. Assembly (1) for an aircraft according to any one of claims 1 to 6, **characterised in that** said attachments means (8) also comprise an aft attachment (27) designed to resist forces applied along a longitudinal direction (X) of said pylon (4), along the width direction (32) and along the vertical direction (Z).

9. Assembly (1) for an aircraft according claim 7 or claim 8, **characterised in that** said attachment means (8) form a statically determinate mounting system composed exclusively composed of said two forward half-attachments (29a, 29b) and said aft attachment (27).

10. Aircraft **characterised in that** it comprises at least one assembly (1) according to any one of the previous claims.

## Patentansprüche

1. Baueinheit (1) für ein Flugzeug, die ein Tragflächenelement (2) sowie eine Montagestruktur (4) eines Motors (10) unter dem Tragflächenelement umfasst, wobei die Baueinheit auch Befestigungsmittel (8) einer starren Struktur (6) der Struktur (4) an dem Tragflächenelement (2) umfasst, wobei die Befestigungsmittel (8) zwei vordere Halbverbindungen (29a,29b) umfassen, die jeweils mit einem Schäkel bzw. Schwingarm (38) ausgestattet und derart gestaltet sind, dass sie die Aufnahme von in zur Montagestruktur vertikalen Richtung (Z) ausgeübten Kräften sicherstellen, wobei der Schäkel bzw. Schwingarm (38) einerseits mittels einer ersten Achse (56) schwenkbar an einem ersten Beschlag (50), der mit einem zu dem Tragflächenelement (2) gehörenden und sich in Spannweitenrichtung (32) dieses Tragflächenelements (2) erstreckenden vorderen Längsträger (34) verbunden ist, angebracht ist, und andererseits mittels einer zweiten Achse (46) schwenkbar an einem zweiten Beschlag (42), der mit der starren Struktur (6) verbunden ist, angebracht ist, **dadurch gekennzeichnet, dass** die zwei Schäkel bzw. Schwingarme (38) der vorderen Halbverbindungen in der gleichen, zur Spannweitenrichtung (32) parallelen Ebene (P) angeordnet sind.

2. Baueinheit (1) für ein Flugzeug nach Anspruch 1, **dadurch gekennzeichnet, dass** die Ebene (P), in der die zwei Schäkel Schwingarme (38) der vorderen Halbverbindungen (29a,29b) angeordnet sind, auch zur zur Montagestruktur vertikalen Richtung (Z) parallel ist.

3. Baueinheit (1) für ein Flugzeug nach Anspruch 1 oder Anspruch 2, **dadurch gekennzeichnet, dass** der zweite Beschlag (42) jeder vorderen Halbverbindung (29a, 29b) ein Beschlag mit zwei Köpfen ist, zwischen denen der Schäkel bzw. Schwingarm (38) angeordnet ist.

4. Baueinheit (1) für ein Flugzeug nach einem der vorhergehenden Ansprüche, **dadurch gekennzeichnet, dass** für jede vordere Halbverbindung (29a,29b) die erste Achse (56) auch einen fest an dem Tragflächenelement (2) angebrachten zweiten Beschlag (52) derart durchdringt, dass der Schäkel bzw. Schwingarm (38) zwischen dem ersten Beschlag (50) und dem zweiten Beschlag (52) positioniert ist.

5. Baueinheit (1) für ein Flugzeug nach einem der vorhergehenden Ansprüche, **dadurch gekennzeichnet, dass** eine (29a) der zwei vorderen Halbverbindungen (29a,29b) derart gestaltet ist, dass deren Schäkel bzw. Schwingarm (38) auch mittels einer dritten Achse (60) schwenkbar an dem mit dem vorderen Längsträger (34) verbundenen ersten Beschlag (50) angebracht ist, damit diese vordere Halbbefestigung (29a) die Aufnahme von in Spannweitenrichtung (32) ausgeübten Kräften sicherstellen kann.

6. Baueinheit (1) für ein Flugzeug nach Anspruch 5, **dadurch gekennzeichnet, dass** die erste, zweite und dritte Achse (56,46,60) orthogonal in Bezug auf die Ebene (P) ausgerichtet sind.

7. Baueinheit (1) für ein Flugzeug nach einem der vorhergehenden Ansprüche, **dadurch gekennzeichnet, dass** die Befestigungsmittel (8) ferner eine hintere Verbindung (27) umfassen, die derart gestaltet ist, dass sie die Aufnahme von in Längsrichtung (X) der Struktur (4), in Querrichtung (Y) derselben Struktur (4) sowie in der vertikalen Richtung (Z) ausgeübten Kräften sicherstellt.

8. Baueinheit (1) für ein Flugzeug nach einem der Ansprüche 1 bis 6, **dadurch gekennzeichnet, dass** die Befestigungsmittel (8) ferner eine hintere Verbindung (27) umfassen, die derart gestaltet ist, dass sie die Aufnahme von in Längsrichtung (X) der Struktur (4), in Spannweitenrichtung (32) sowie in der vertikalen Richtung (Z) ausgeübten Kräften sicherstellt.

9. Baueinheit (1) für ein Flugzeug nach Anspruch 7 oder Anspruch 8, **dadurch gekennzeichnet, dass** die Befestigungsmittel (8) ein isostatisches Montagesystem bilden, das ausschließlich aus den zwei vorderen Halbverbindungen (29a,29b) und der hinteren Verbindung (27) besteht.

10. Flugzeug, **dadurch gekennzeichnet, dass** es mindestens eine Baueinheit (1) nach einem der vorhergehenden Ansprüche umfasst.
